# EUROPEAN PATENT APPLICATION

(11) **EP 4 304 006 A1**
(43) Date of publication of application: **10.01.2024**
(21) Application number: 22182720.7
(22) Date of filing: 04.07.2022
(51) Int. Cl.: H01Q 1/22, H01Q 1/42, H01Q 7/00, A61C 17/22, H01Q 1/44, A46D 3/00

(54) **A COMMUNICATIONS COMPONENT FOR AN ATTACHMENT OF AN ORAL CARE DEVICE AND A METHOD OF MANUFACTURING THE SAME**

(71) Applicant: Koninklijke Philips N.V., 5656 AG Eindhoven (NL)
(72) Inventor: FREIMUTH, Guenther, Eindhoven (NL)
(74) Representative: Philips Intellectual Property & Standards

(57) **Abstract**

According to an aspect, there is provided a method (100) of manufacturing a communications component for an attachment assembly of an oral care device, the method comprising: creating (102) an antenna assembly; and fitting (110) the antenna assembly to a cold-formed metal ring. Creating (102) the antenna assembly comprises forming (104) a base of the antenna assembly using an injection moulding process; positioning (106) an antenna on the base; and forming (108) a cover over the base and the antenna using an injection moulding process.

## Description

### FIELD OF THE INVENTION

The invention relates to a communications component for an attachment of an oral care device and a method of manufacturing the same. More particularly, but not exclusively, the invention relates to a communications component comprising an antenna assembly and a cold-formed metal ring coupled to the antenna assembly.

### BACKGROUND OF THE INVENTION

Previously, manufacturing a communications component might involve making an antenna using a semi-automated coil winding method, which can be labour intensive and can result in damage to the antenna due to handling of the antenna. A chip might then be soldered to the antenna manually, which can also be a labour-intensive process, and, due to the small size of the chip, requires high precision and can be prone to error. The previous method may further involve covering the antenna and chip with an epoxy material to fix the components together. However, fixing the components together in this way requires care, and as a result can be a time-consuming process, due to the epoxy material being sensitive to temperature, due to the epoxy material comprising two parts that need to be mixed in a specific ratio and due to the difficult nature of handling liquid epoxy material. A further downside to using epoxy material is related to the negative environmental footprint of epoxy. The previous method may further involve manufacturing a metal ring, for example using an alloy from the ZAMAK family of alloys, the metal ring being formed using molten material, which requires a lot of energy to melt. Also, the metal ring formed in this way may need to be coated with another material to improve the anticorrosion properties of the ring. The previous method may further involve gluing the epoxy coated antenna into the metal ring, which requires application of a certain amount of glue, and sometimes also heat in order to melt the glue. Care must be taken when performing this process due to the liquid nature of the glue. Further disadvantages associated with using glue include that glue may have a long drying time and/or may need to be dried in an oven, it can be sticky, and it can be difficult to handle and/or correct a communications component should there be a problem, such as the glue not being applied correctly.

It is therefore desirable to improve the method of manufacturing a communications component such that the amount of energy, and thus cost, associated with manufacturing a communications component is reduced, and such that a more reliable communications component can be made in a more automated way. It is also desirable to use more environmentally friendly materials to manufacture a communications component.

### SUMMARY OF THE INVENTION

A communications component may form part of an oral care device, for example to provide communication between an attachment assembly, in which the communications component may be fitted, and a base portion of an oral care device. Another purpose of such a component might be to provide an appropriate inertia ratio between the attachment assembly and the base portion of an oral care device such that stable operation of the oral care device is realised and such that the oral care device is able to provide good results (e.g., satisfactory cleaning results).

Manufacturing a communications component for an attachment assembly of an oral care device is traditionally an expensive, time-consuming and labour-intensive process, which can require requiring significant energy expenditure and require manual handling of certain components. Furthermore, traditional methods for manufacturing a communications component require strict conditions for processing due to the materials being used and the processes being implemented. It is therefore an aim of the invention described herein to overcome these drawbacks thereby to provide more reliable and higher quality communications components in a more automated manner, which is achieved by utilising injection moulding and cold-forming processes, amongst other things.

According to a first specific aspect, there is provided a method of manufacturing a communications component for an attachment assembly of an oral care device. The method comprises creating an antenna assembly by: forming a base of the antenna assembly using an injection moulding process; positioning an antenna on the base; and forming a cover over the base and the antenna using an injection moulding process. The method further comprises fitting the antenna assembly to a cold-formed metal ring.

In some embodiments, the method may further comprise forming the cold-formed metal ring using a cold-forming process.

The cold-forming process may, in some embodiments, comprise a stamping process.

In some embodiments, the injection moulding process used to form the cover may comprise an overmoulding injection moulding process.

Fitting the antenna assembly to the cold-formed metal ring may, in some embodiments, comprise using a snap-fit mechanism.

In some embodiments, the method may further comprise forming the antenna using an air coil winding process.

According to a second aspect, there is provided a communications component for an attachment assembly of an oral care device. The communications component comprises an antenna assembly comprising: an injection-moulded base; an antenna located on the base; and an injection-moulded cover located on the base and over the antenna. The communication component further comprises a cold-formed metal ring coupled to the antenna assembly.

In some embodiments, the attachment assembly may comprise a brush head, a tongue cleaner or an oral irrigation attachment.

The cold-formed metal ring may, in some embodiments, comprise steel.

In some embodiments, the antenna assembly may further comprise a chip attached to the antenna, the chip configured to enable communications between the communications component and a base portion of an oral care device.

The chip may, in some embodiments, comprise a radiofrequency identification, RFID, chip or a near-field communication, NFC, chip.

According to a third aspect, an attachment assembly for an oral care device is provided. The attachment assembly comprises the communications component as defined herein.

According to a fourth aspect, an oral care device is provided. The oral care device comprises a base portion; and an attachment assembly as defined herein.

According to a fifth aspect, a computer-implemented method for facilitating manufacture of a communications component for an attachment assembly of an oral care device is provided. The method comprises operating an injection moulding apparatus to form a base of an antenna assembly; operating a positioning apparatus to position an antenna on the base; operating an injection moulding apparatus to form a cover over the base and the antenna; and operating a coupling apparatus to couple the antenna assembly to a cold-formed metal ring.

According to a sixth aspect, a system for making a communications component for an attachment assembly of an oral care device is provided. The system comprises a base forming apparatus configured to form a base of an antenna assembly using an injection moulding process; an antenna positioning apparatus configured to position an antenna on the base; a cover forming apparatus configured to form, using an injection moulding process, a cover over the base and the antenna; and a coupling apparatus configured to couple the antenna assembly to a cold-formed metal ring.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a flowchart of an example of a method of manufacturing a communications component for an attachment assembly of an oral care device;
Fig. 2 is a flowchart of a further example of a method of manufacturing a communications component for an attachment assembly of an oral care device;
Fig. 3 is an illustration of an example of a communications component for an attachment assembly of an oral care device and components thereof;
Fig. 4 is an illustration of an example of a cold-formed metal ring;
Fig. 5 is a schematic illustration of an example of an attachment assembly;
Fig. 6 is a schematic illustration of an example of an oral care device;

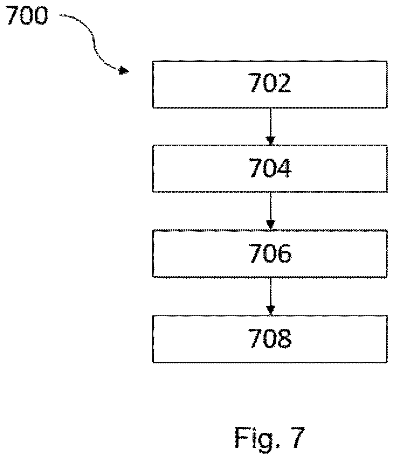

Fig. 7 is a flowchart of an example of a computer-implemented method for facilitating manufacture of a communications component for an attachment assembly of an oral care device;

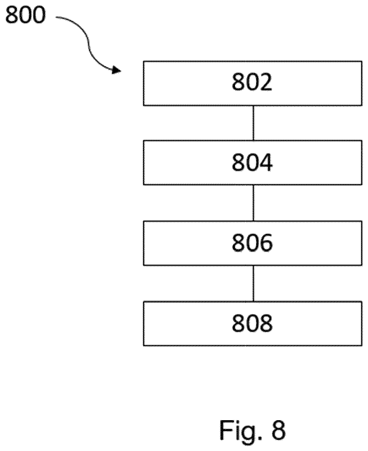

Fig. 8 is an example of a system for making a communications component for an attachment assembly of an oral care device; and
Fig. 9 is a schematic illustration of a processor in communication with a non-transitory computer readable medium.

### DETAILED DESCRIPTION OF EMBODIMENTS

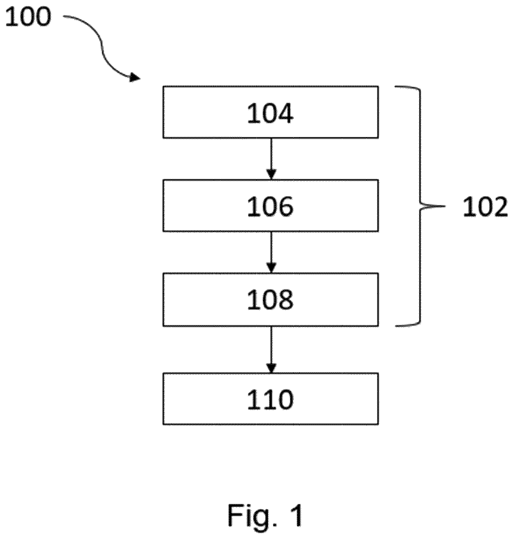

According to a first aspect, the present invention provides a method of manufacturing a communications component for an attachment assembly of an oral care device. Fig. 1 is a flowchart of an example of such a method 100. The method 100 comprises, at step 102, creating an antenna assembly by, at step 104, forming a base of the antenna assembly using an injection moulding process. The base may be produced using any type of injection moulding process, such as insert moulding, overmoulding, or the like. In some examples, injection moulding may comprise one or more of the steps of melting a plastic resin, pressing the resultant liquid plastic resin into a mould, and cooling down the liquid plastic resin so that the resin solidifies. Injection moulding may use materials including, for example, thermoplastic materials. Thermoplastic materials that may be used in the injection moulding process described herein may comprise acrylonitrile butadiene styrene, polyoxymethylene, polypropylene, or the like.

Creating an antenna assembly further comprises, at step 106, positioning an antenna on the base. In some examples, the antenna may comprise an antenna coil (e.g., a coil of wire forming an antenna). In some examples, the antenna may be placed onto the base by a machine. In some examples, the antenna may be placed around a rim protruding from the base, which may help to secure the antenna to the base. In other words, the rim may support or hold the antenna on the base. For example, the antenna may be pushed onto the rim of the antenna assembly. In some examples, the rim may help to prevent damage, or deformation of, the antenna. In some examples, the location of the rim on the antenna assembly may define the position of the antenna with respect to the antenna assembly and thus the position of the antenna with respect to any product to which the antenna assembly may be fitted (e.g., an oral care device). The rim may also aid in the subsequent step of forming a cover over the base. The antenna may be manufactured from a metal material. For example, the antenna may be manufactured from copper or the like.

Creating an antenna assembly further comprises, at step 108, forming a cover over the base and the antenna using an injection moulding process. In some embodiments, the injection moulding process used to form the cover may comprise an overmoulding injection moulding process. Overmoulding is an injection forming process that involves the moulding of a first material over a second material thereby forming a single product. Forming the cover of the antenna assembly in this way can be advantageous for a number of reasons, including that multiple parts (e.g., the base and the cover of the antenna assembly) may be combined in a seamless way, which can improve the durability and/or strength of the product and thus the quality and reliability of the product. For example, the cover may be configured to protect the antenna from impact and/or prevent material (e.g., water) from coming into contact with the antenna. In some examples, depending on the materials used during the overmoulding process, the antenna assembly may exhibit improved shock absorption (e.g., if using a resin comprising rubber during the overmoulding process). In some examples, overmoulding may use a thermoplastic material. For example, an easy flowing thermoplastic resin may be used during overmoulding, such as polypropylene (e.g., polypropylene random copolymer). Advantages of using polypropylene include, for example, polypropylene's chemical resistance, elasticity, fatigue resistance and electrical resistance.

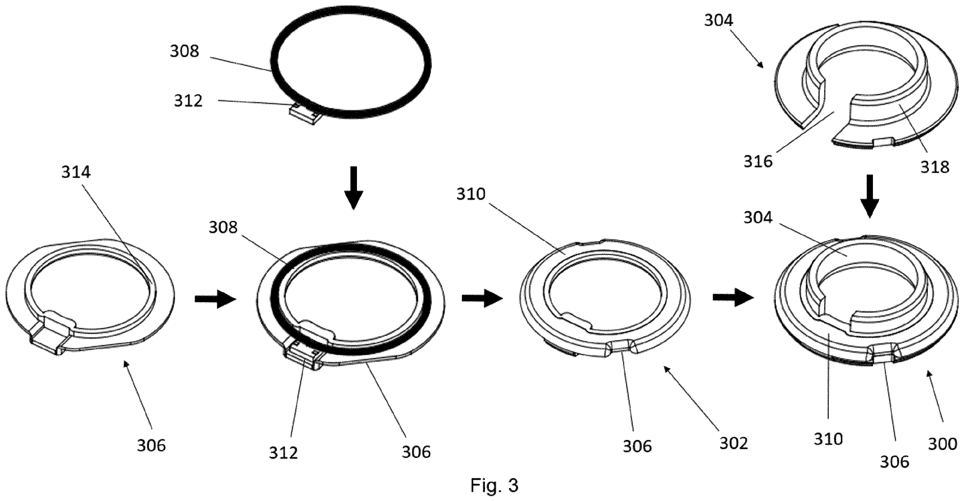

The method 100 further comprises, at step 110, fitting the antenna assembly to a cold-formed metal ring. In some embodiments, fitting the antenna assembly to the cold-formed metal ring may comprise using a snap-fit mechanism. Fitting the antenna assembly to the metal ring using a snap-fit mechanism may allow the two components (i.e., the antenna assembly and the metal ring) to be connected easily, reliably and/or securely. In some examples, the metal ring may comprise a protrusion and/or a groove enabling the antenna assembly to connect to the metal ring in a secure manner. For example, the antenna assembly may be configured such that it fits over a protrusion of the metal ring (e.g., see Fig. 3). In some examples, the metal ring may comprise a groove and the antenna assembly may comprise a corresponding protrusion such that, when the antenna assembly is fitted to the metal ring, the protrusion of the antenna assembly fits into the groove of the metal ring. In some examples, the antenna assembly may be glued to the cold-formed metal ring, screwed to the cold-formed metal ring, or the like.

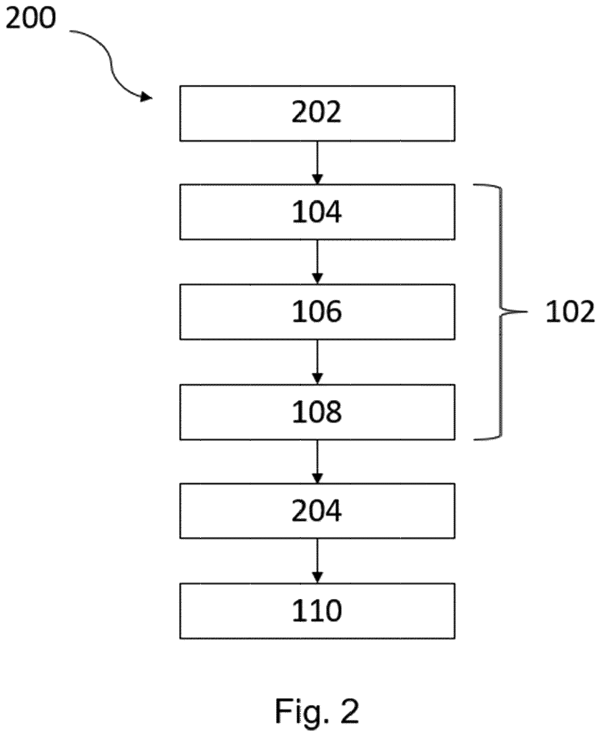

Fig. 2 is a flowchart of a further example of a method 200 of manufacturing a communications component for an attachment assembly of an oral care device. The method 200 comprises the steps of method 100. In some embodiments, the method 200 may further comprise, at step 202, forming the cold-formed metal ring using a cold-forming process. The cold-forming process may, in some embodiments, comprise a stamping process. The stamping process may comprise, in some examples, cutting a piece of material from a sheet (e.g., a plate) of material. In some examples, the stamping process may comprise forming a particular shape out of the sheet material (e.g., the piece of material cut out from the sheet of material). In some examples, a cut-out portion (e.g., see cut-out portion 316 of Fig. 3) may be cut-out of the cold-formed metal ring 304 once the metal ring has been formed. In other examples, a cut-out portion (e.g., cut-out portion 316 of Fig. 3) may be formed during the stamping process. The metal ring may comprise one or more cut out portions. Advantages of using a cold-forming process to form the metal ring is that no heating is required, thus reducing the energy required to manufacture the metal ring, and simplifying the manufacturing setup required to make the metal ring (e.g., equipment for handling molten metal material is not required). Other advantages of cold-forming the metal ring include that a better surface finish and/or better reproducibility may be obtained, contamination problems may be minimised, and the like.

In some embodiments, the method 200 may further comprise, at step 204, forming the antenna using an air coil winding process. Thus, the antenna may comprise an air coil. Advantageously, air coil winding can be implemented fully automatically, thereby minimising any handling of an antenna and thus minimising the possibility for damage to the antenna. An air coil is a coil of material without a magnetic core (e.g., copper wires bundled, or wound, together).

Fig. 3 shows an example of a communications component 300 for an attachment assembly of an oral care device and components thereof, and how the components are fitted together. The communications component 300 comprises an antenna assembly 302 and a cold-formed metal ring 304 coupled to the antenna assembly. The antenna assembly 302 comprises an injection-moulded base 306, an antenna 308 located on the base, and an injection-moulded cover 310 located on the base and over the antenna. In some examples, the base 306 may be referred to as a carrier ring. In some examples, the cover 310 may encapsulate (be located over) the entire antenna 308. In other examples, the cover 310 may encapsulate part of the antenna 308. In some examples, the base 306 may be circular in shape. In some examples, the base 306 may have a non-circular shape, such as an oval, a square, or the like. In some examples, the base 306 may be in the form of an annulus. In some examples, the base 306 may comprise a rim. For example, if the base 306 is annular in shape, the rim may protrude from the inner circumference 314 of the base. In some examples, the rim may extend around the whole, or a part of the, circumference, or perimeter, of the base 306. In some examples, a chip 312 may be connected to the antenna 308. In some examples, the chip may be connected to the antenna using a soldering process, a welding process, or the like. The cover 310 may be located over part, or all of, the chip 312. In some examples, the base 306 may comprise a groove such that the groove can accommodate a chip 312. In some examples, the groove may be referred to as a pocket (in which the chip 312 may sit). For example, the groove may hold the chip 312 in place and/or protect the chip. In some examples, the groove may be configured to protect the connection between the antenna 308 and the chip 312 (e.g., the soldered or welded connection). In some examples, the metal ring 304 may have a circular shape. In other examples, the metal ring 304 may have an oval shape, square shape, or the like. In some examples, the metal ring 304 may be in the shape of an annulus. The metal ring 304 may, in some examples, have the same, or similar, shape as the base. In some examples, the metal ring 304 may comprise a cut-out portion 316. The cut-out portion 316 may be shaped such that the metal ring, and thus the communications component, can be fit together with a neighbouring component (e.g., when the communications component is installed in an attachment assembly of an oral care device). For example, the metal ring, and thus the communications component, may form part of an attachment assembly for an oral care device, wherein the cut-out portion of the metal ring may be configured to connect to a neighbouring component of the attachment assembly.

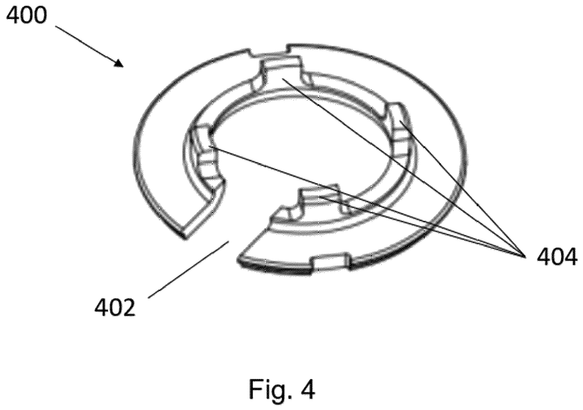

The metal ring 304 may, in some examples, comprise a protrusion 318. The antenna assembly 302 may be configured to fit over the protrusion 318 of the metal ring thereby to enable connection of the antenna assembly and the metal ring. In some examples, the metal ring 304 may comprise two or more protrusions as opposed to a single protrusion 318. Fig. 4 shows an illustration of an example of a cold-formed metal ring 400 comprising four protrusions 404 and a cut-out portion 402. Advantageously, using a metal ring with two or more protrusions, as opposed to a single protrusion (e.g., as shown by protrusion 318 in Fig. 3), is that a reduction in weight of the metal ring may be achieved. In some examples, a lower weight of the metal ring, and thus the communications component, may be beneficial when the communications component is installed in an attachment assembly of an oral care device. For example, a frequency of a brush head of an oral care device may require that an attachment assembly is within a defined weight range such that the frequency of oscillations of the brush head is within a defined (e.g., desired) frequency range.

In some embodiments, the attachment assembly may comprise a brush head, a tongue cleaner or an oral irrigation attachment.

The cold-formed metal ring 304 may, in some embodiments, comprise steel. In some examples, the cold-formed metal ring 304 may comprise stainless steel, which, advantageously, may reduce corrosion of the metal ring. In other examples, the metal ring 304 may be formed of a metal, or a metal alloy, such as iron, copper, brass, or the like.

In some embodiments, the antenna assembly 302 may further comprise a chip 312 attached to the antenna 308, the chip configured to enable communications between the communications component 300 and a communications component located in a base portion of an oral care device. In some examples, the chip 312 may be attached to the antenna 308 using laser soldering, or the like. In some examples, the chip 312 may comprise one or more soldering pads (e.g., on an upper surface of the chip). A soldering pad may comprise solder. The antenna may be attached to the chip by placing an end of an antenna (e.g., a loose end of an antenna coil) onto a soldering pad of the chip 312. In some examples, each end of the antenna coil may be located on a soldering pad of the chip 312. For example, each end of the antenna may be located on a different soldering pad on the chip 312. One or more pins (e.g., a melting pin) may then press the ends of the antenna onto the soldering pads of the chip. As a result of the melting pin pressing down on an end of the antenna, the antenna and/or the soldering pad may be caused to heat up such that the antenna may become fixed onto the chip. For example, the heat caused by a melting pin pressing down on the antenna may cause a part of the soldering pad to melt, thereby forming a bond between the antenna and soldering pad (and thus the chip 312) when the melted part of the soldering pad has solidified. This method may be referred to as a thermo-compression method.

The chip 312 may, in some embodiments, comprise a radiofrequency identification (RFID) chip or a near-field communication (NFC) chip.

In some examples, communications between the communications component 300 and a base portion of an oral care device (e.g., using an RFID chip or an NFC chip) may allow identification of an attachment assembly by the base portion of the oral care device. The base portion of an oral care device may be configured to control an operation of the attachment assembly, such as a speed of oscillation of a brush head. As a result of communications between the communications component 300 and the base portion of the oral care device, the base portion may be configured to change a setting associated with operation of the attachment assembly. In this way, different attachment assemblies may be fitted to the base portion of the oral care device, wherein each of the attachment assemblies may be caused to operate in different ways, based on an identification of an attachment assembly by the base portion of the oral care device.

In some examples, communications between the communications component 300 and a base portion of an oral care device may be used to improve the safety of an oral care device. The base portion may comprise a handle portion, which may comprise a drive assembly which oscillates a driveshaft through a specific angle. The base portion may comprise a battery or the like. For example, the base portion may be configured such that it is not operable (e.g., a motor of the base portion may not receive power) until the attachment assembly has been fitted to the base portion.

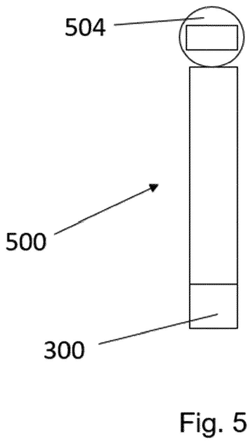

According to a third aspect, an attachment assembly for an oral care device is provided, the attachment assembly comprising a communications component 300 as described herein. Fig. 5 shows a schematic illustration of an example of an attachment assembly 500 assembly for an oral care device, according to various embodiments. The attachment assembly 500 comprises a communications component 300. In some examples, the attachment assembly may comprise a head portion 504, which may comprise a brush head, a tongue cleaner, or the like. In some examples, the attachment assembly 500 may comprise a connection portion (not shown) configured to connect the attachment assembly to a base of the oral care device. The connection portion may include any suitable connection mechanism for attaching the attachment assembly 500 to a base of an oral care device. Such connection mechanisms will be the known to those skilled in the field. However, it will be appreciated that, in other embodiments, the head portion 504 and/or the connection portion may be omitted.

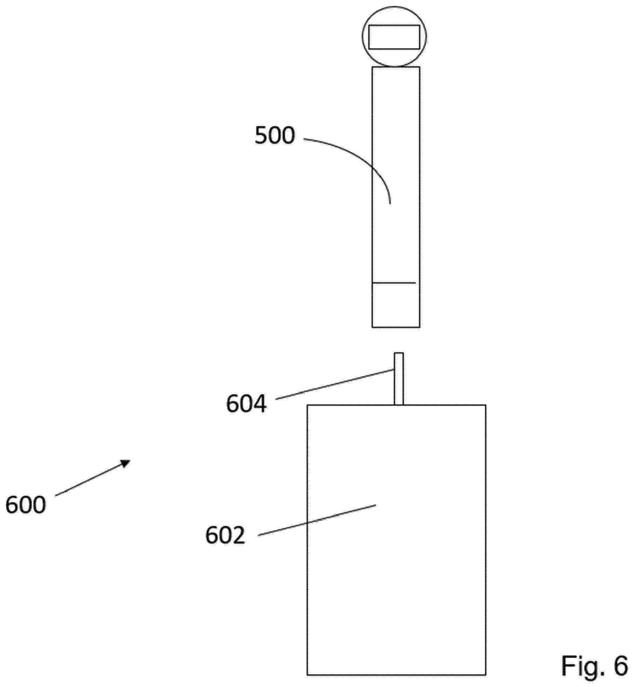

According to a fourth aspect, an oral care device is provided, the oral care device comprising a base portion and an attachment assembly as described herein. Fig. 6 is a schematic illustration of a further example of an oral care device 600 according to various embodiments. The oral care device 600 comprises a base portion 602 and an attachment assembly. The attachment assembly may comprise the attachment assembly 500 discussed above. The attachment assembly 500 may connect or attach to the base portion 602 using the connection portion which may, for example, interact with a complementary connection mechanism of the base portion 602. The attachment assembly may be mounted on an end portion of driveshaft 604.

According to a fifth aspect, a computer-implemented method 700 for facilitating manufacture of a communications component 300 for an attachment assembly of an oral care device is provided. The method 700 comprises operating, at step 702, an injection moulding apparatus to form a base 306 of an antenna assembly. An injection moulding apparatus may be used in mass production of manufacturing parts (e.g., a base of an antenna assembly). The injection moulding apparatus may feed plastic resin into a screw unit. The screw unit may be configured to heat up the resin to turn it into a liquid. Once the resin is liquid, the resin may be injected (e.g., pressed) into an injection mould cavity under high pressure (e.g., 1000 bar, greater than 1000 bar, 1500 bar, or the like). Next, a cooling process may take place whereby the liquid resin turns into a solid (e.g., freezes). Once the resin has solidified, the mould may be pushed out of the moulding cavity. For example, ejector pins may be used to push an injection-formed product (e.g., the base) out of the mould.

The method 700 further comprises operating, at step 704, a positioning apparatus to position an antenna 308 on the base. The positioning of the antenna on the base may be performed automatically, for example using robot handling. For example, a mechanical gripper may be connected to an arm, wherein the gripper is configured to pick up the antenna and place it onto the base.

The method 700 further comprises operating, at step 706, an injection moulding apparatus to form a cover 310 over the base and the antenna.

The method 700 further comprises operating, at step 708, a coupling apparatus to couple the antenna assembly to a cold-formed metal ring 304. This step may be performed in an automated way, for example using robot handling. The antenna assembly may be placed over the cold-formed metal ring. The antenna assembly and the cold-formed metal ring may be pressed together. The antenna assembly and the cold-formed metal ring may be held together using a snap-fit mechanism.

The apparatuses 702, 704, 706, 708 may be positioned in a production hall, may comprise their own frames (e.g., are separate to one another), and may operate automatically using individual control systems. Each apparatus 702, 704, 706, 708 may comprise a safety cabinet to ensure the safety of anyone located in the vicinity of the apparatus. Components of the invention disclosed herein (e.g., the base portion 306) may be passed between the apparatuses 702, 704, 706, 708 using an automatic transport system (e.g., a conveyor belt). In some examples, each apparatus 702, 704, 706, 708 may perform its function independently of the other apparatuses. For example, an injection moulding apparatus may be configured to form a base of an antenna assembly, wherein the base is then transported (e.g., using a conveyor belt) to the positioning apparatus such that an antenna is positioned on the base. In other examples, the base may be formed using an injection moulding apparatus and at some defined time later, the antenna may be fitted to the base (e.g., the base may be removed from the injection moulding apparatus and input to the positioning apparatus at a later time).

According to a sixth aspect, a system 800 for making a communications component 300 for an attachment assembly of an oral care device is provided. The system comprises a base forming apparatus 802 configured to form a base 306 of an antenna assembly using an injection moulding process; an antenna positioning apparatus 804 configured to position an antenna 308 on the base; a cover forming apparatus 806 configured to form, using an injection moulding process, a cover 310 over the base and the antenna; and a coupling 808 apparatus configured to couple the antenna assembly to a cold-formed metal ring 304.

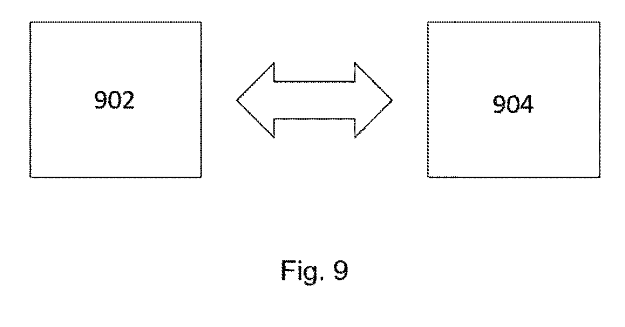

Another aspect of the invention relates to a computer program product. Fig. 9 a schematic illustration of a non-transitory computer readable medium 902 in communication with a processor 904. In some embodiments, a computer program product comprising a non-transitory computer readable medium 902 may be provided, the computer readable medium having computer readable code embodied therein, the computer readable code being configured such that, on execution by a suitable computer or processor 904, the computer or processor is caused to perform steps of the methods disclosed herein.

The processor 904 can comprise one or more processors, processing units, multi-core processors or modules that are configured or programmed to control components of the system 800 in the manner described herein. In particular implementations, the processor 904 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g., Java interpreter instructions). Alternatively, one or more or all of the sub-routines may be stored in at least one external library file and linked with a main program either statically or dynamically, e.g., at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method (100) of manufacturing a communications component for an attachment assembly of an oral care device, the method comprising:
creating (102) an antenna assembly by:
forming (104) a base of the antenna assembly using an injection moulding process;
positioning (106) an antenna on the base; and
forming (108) a cover over the base and the antenna using an injection moulding process; and
fitting (110) the antenna assembly to a cold-formed metal ring.

2. A method (100, 200) according to claim 1, further comprising:
forming (202) the cold-formed metal ring using a cold-forming process.

3. A method (100, 200) according to claim 2, wherein the cold-forming process comprises a stamping process.

4. A method (100, 200) according to any preceding claim, wherein the injection moulding process used to form the cover comprises an overmoulding injection moulding process.

5. A method (100, 200) according to any preceding claim, wherein fitting the antenna assembly to the cold-formed metal ring comprises using a snap-fit mechanism.

6. A method (100, 200) according to any preceding claim, further comprising:
forming (204) the antenna using an air coil winding process.

7. A communications component (300) for an attachment assembly of an oral care device, the communications component comprising:
an antenna assembly (302) comprising:
an injection-moulded base (306);
an antenna (308) located on the base; and
an injection-moulded cover (310) located on the base and over the antenna; and
a cold-formed metal ring (304, 400) coupled to the antenna assembly.

8. A communications component (300) according to claim 7, wherein the attachment assembly comprises a brush head, a tongue cleaner or an oral irrigation attachment.

9. A communications component (300) according to claim 7 or claim 8, wherein the cold-formed metal ring (304, 400) comprises steel.

10. A communications component (300) according to any one of claims 7 to 9, wherein the antenna assembly (302) further comprises a chip (312) attached to the antenna (308), the chip configured to enable communications between the communications component and a base portion of an oral care device.

11. A communications component (300) according to claim 10, the chip (312) comprising a radiofrequency identification, RFID, chip or a near-field communication, NFC, chip.

12. An attachment assembly (500) for an oral care device, the attachment assembly comprising the communications component (300) according to any one of claims 7 to 11.

13. An oral care device (600) comprising:
a base portion (602); and
an attachment assembly (500) according to claim 12.

14. A computer-implemented method (700) for facilitating manufacture of a communications component for an attachment assembly of an oral care device, the method comprising:
operating (702) an injection moulding apparatus to form a base of an antenna assembly;
operating (704) a positioning apparatus to position an antenna on the base;
operating (706) an injection moulding apparatus to form a cover over the base and the antenna; and
operating (708) a coupling apparatus to couple the antenna assembly to a cold-formed metal ring.

15. A system (800) for making a communications component for an attachment assembly of an oral care device, the system comprising:
a base forming apparatus (802) configured to form a base of an antenna assembly using an injection moulding process;
an antenna positioning apparatus (804) configured to position an antenna on the base;
a cover forming apparatus (806) configured to form, using an injection moulding process, a cover over the base and the antenna; and
a coupling apparatus (808) configured to couple the antenna assembly to a cold-formed metal ring.
